# EUROPÄISCHE PATENTSCHRIFT

(11) **EP 1 474 604 B1**
(45) Veröffentlichungstag und Bekanntmachung des Hinweises auf die Patenterteilung: **26.09.2007**
(21) Anmeldenummer: 02792695.5
(22) Anmeldetag: 23.12.2002
(51) Int. Cl.: F02M 61/18

(54) **BRENNSTOFFEINSPRITZVENTIL**
FUEL INJECTION VALVE
SOUPAPE D'INJECTION DE CARBURANT

(30) Priorität: 05.02.2002 DE 10204656
(43) Veröffentlichungstag der Anmeldung: 10.11.2004
(73) Patentinhaber: ROBERT BOSCH GMBH, 70442 Stuttgart (DE)
(72) Erfinder: HOLZGREFE, Volker, 71254 Ditzingen (DE); ARNDT, Stefan, 70569 Stuttgart (DE); RAIMANN, Juergen, 71263 Weil Der Stadt (DE); HEYSE, Joerg, 74354 Bietigheim (DE)
(74) Vertreter: Körfer, Thomas
(86) Internationale Anmeldenummer: PCT/DE2002/004731
(87) Internationale Veröffentlichungsnummer: WO 2003/067076

(56) Entgegenhaltungen:
- EP-A- 0 610 229
- WO-A1-03/031806
- DE-A- 19 911 928
- JP-A- 2000 345 944
- US-A- 4 519 370
- PATENT ABSTRACTS OF JAPAN vol. 1995, no. 11, 26. Dezember 1995 (1995-12-26) & JP 07 197871 A (KEIHIN SEIKI MFG CO LTD), 1. August 1995 (1995-08-01)
- PATENT ABSTRACTS OF JAPAN vol. 1995, no. 11, 26. Dezember 1995 (1995-12-26) & JP 07 208294 A (KEIHIN SEIKI MFG CO LTD), 8. August 1995 (1995-08-08)

## Beschreibung

### Stand der Technik

Die Erfindung geht aus von einem Brennstoffeinspritzventil nach der Gattung des Anspruchs 1.

Aus der DE 198 04 463 A1 ist ein Brennstoffeinspritzsystem für eine gemischverdichtende, fremdgezündete Brennkraftmaschine bekannt, welches ein Brennstoffeinspritzventil umfaßt, das Brennstoff in einen von einer Kolben-/Zylinderkonstruktion gebildeten Brennraum einspritzt, und mit einer in den Brennraum ragenden Zündkerze versehen ist. Das Brennstoffeinspritzventil ist mit mindestens einer Reihe über den Umfang des Brennstoffeinspritzventils verteilt angeordneten Einspritzlöchern versehen. Durch eine gezielte Einspritzung von Brennstoff über die Einspritzlöcher wird eine strahlgeführtes Brennverfahren durch Bildung einer Gemischwolke mit mindestens einem Strahl realisiert.

Nachteilig an dem aus der obengenannten Druckschrift bekannten Brennstoffeinspritzventil ist insbesondere die Verkokung der Abspritzöffnungen, welche dadurch verstopfen und den Durchfluß durch das Brennstoffeinspritzventil unzulässig stark vermindern. Dies führt zu Fehlfunktionen der Brennkraftmaschine.

Ein aus der DE 199 11 928 A1 bekanntes Brennstoffeinspritzventil für eine Brennkraftmaschine hat einen Ventilkörper, eine Einspritzöffnung und einen Brennstoffspeicher auf der stromabwärtigen Seite eines Stitzabschnitts des Ventilkörpers. Eine Öffnung auf der Außenseite der Einspritzöffnung hat eine Breite, die allgemein größer ist, als eine Weite davon, wobei die Breite der Einspritzöffnung allmählich einwärts abnimmt, so dass der Brennstoff in der Richtung der Breite mit einem vorbestimmten Winkel eingespritzt wird. Die Weite der Einspritzöffnung in Einspritzrichtung des Brennstoffs innerhalb des vorbestimmten Winkels in der Breitenrichtung ist im wesentlichen gleichmäßig. Ein Durchgangsloch ist an dem Mittelabschnitt bzw. an den Seiten in der Breitenrichtung der Einspritzöffnung ausgebildet, wobei das Durchgangsloch mit dem Brennstoffspeicher verbunden ist und eine Weite hat, die größer ist, als die Weite der Einspritzöffnung.

Dokument JP 2000 345 944 A offenbart ein Brennstoffeinspritzventil das zumindest zwei Abspritzöffnungen aufweist. Die Abspritzöffnungen sind stromabwärts einer Ventilsitzfläche ausgebildet, wobei die Abspritzöffnungen in einem Mündungsbereich mit auf der dartigen Bauteil-Stirnseite ausgebildeten Kapillaren in Verbindung stehen, wobei pro Abspritzöffnung zumindest eine Kapillare vorgesehen ist

### Vorteile der Erfindung

Das erfindungsgemäße Brennstoffeinspritzventil mit den Merkmalen des Anspruchs 1 hat demgegenüber den Vorteil, daß Kapillaren im Bereich der Abspritzöffnungen vorgesehen sind, welche den Brennstoff aus dem Austrittsbereich der Abspritzöffnungen ableiten und sich dadurch kein Brennstoff im Bereich der Abspritzöffnungen absetzen kann.

Durch die in den abhängigen Ansprüchen aufgeführten Maßnahmen sind vorteilhafte Weiterbildungen des im Hauptanspruch angegebenen Brennstoffeinspritzventils möglich.

Vorteilhafterweise verfügt jede der Abspritzöffnungen über eine eigene Kapillare, es können jedoch auch mehrere Kapillaren pro Abspritzöffnung vorhanden sein.

Weiterhin ist von Vorteil, daß die Kapillaren in einfacher und kostengünstiger Weise durch beliebige spanende oder nichtspanende Verfahren wie Laserbohren, Ätzen oder Fräsen oder bevorzugt durch Rändeln herstellbar sind.

Von Vorteil ist auch, daß die Anordnung der Kapillaren problemlos jeder Anforderung angepaßt werden können, indem ihr Verlauf über die Oberfläche des Ventilsitzkörpers, ihre Anzahl oder ihre Tiefe variiert werden.

### Zeichnung

Ein Ausführungsbeispiel der Erfindung ist in der Zeichnung vereinfacht dargestellt und in der nachfolgenden Beschreibung näher erläutert. Es zeigen:
- Fig. 1: einen schematischen Schnitt durch ein Ausführungsbeispiel eines erfindungsgemäß ausgestalteten Brennstoffeinspritzventils in einer Gesamtansicht,
- Fig. 2: einen schematischen Schnitt durch den abspritzseitigen Teil des in Fig. 1 dargestellten Ausführungsbeispiels des erfindungsgemäßen Brennstoffeinspritzventils im Bereich II in Fig. 1, und
- Fig. 3: eine schematische Aufsicht auf den Ventilsitzkörper des erfindungsgemäß ausgestalteten Brennstoffeinspritzventils entgegen der Abspritzrichtung.

### Beschreibung des Ausführungsbeispiels

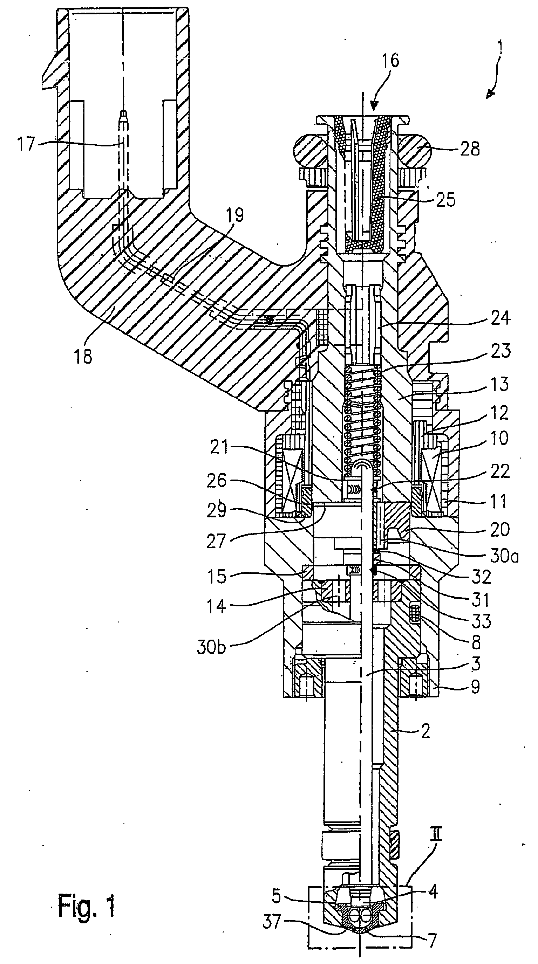

Fig. 1 zeigt in einer auszugsweisen Schnittdarstellung ein Ausführungsbeispiel eines erfindungsgemäß ausgestalteten Brennstoffeinspritzventils 1. Das Brennstoffeinspritzventil 1 ist in der Form eines Brennstoffeinspritzventils 1 für Brennstoffeinspritzanlagen von gemischverdichtenden, fremdgezündeten Brennkraftmaschinen ausgeführt. Das Brennstoffeinspritzventil 1 eignet sich zum direkten Einspritzen von Brennstoff in einen nicht dargestellten Brennraum einer Brennkraftmaschine.

Das Brennstoffeinspritzventil 1 besteht aus einem Düsenkörper 2, in welchem eine Ventilnadel 3 angeordnet ist. Die Ventilnadel 3 steht mit einem Ventilschließkörper 4 in Wirkverbindung, der mit einer auf einem Ventilsitzkörper 5 angeordneten Ventilsitzfläche 6 zu einem Dichtsitz zusammenwirkt. Bei dem Brennstoffeinspritzventil 1 handelt es sich im Ausführungsbeispiel um ein nach innen öffnendes Brennstoffeinspritzventil 1, welches über mehrere Abspritzöffnungen 7 verfügt.

Der Ventilschließkörper 4 des erfindungsgemäß ausgestalteten Brennstoffeinspritzventils 1 weist eine nahezu kugelförmige Form auf. Dadurch wird eine versatzfreie, kardanische Ventilnadelführung erzielt, die für eine exakte Funktionsweise des Brennstoffeinspritzventils 1 sorgt.

Der Ventilsitzkörper 5 des Brennstoffeinspritzventils 1 ist nahezu topfförmig ausgebildet und trägt durch seine Form zur Ventilnadelführung bei. Der Ventilsitzkörper 5 ist dabei in eine abspritzseitige Ausnehmung 34 des Düsenkörpers 2 eingesetzt und mittels einer Schweißnaht 35 mit dem Düsenkörper 2 verbunden.

Der Düsenkörper 2 ist durch eine Dichtung 8 gegen einen Außenpol 9 einer Magnetspule 10 abgedichtet. Die Magnetspule 10 ist in einem Spulengehäuse 11 gekapselt und auf einen Spulenträger 12 gewickelt, welcher an einem Innenpol 13 der Magnetspule 10 anliegt. Der Innenpol 13 und der Außenpol 9 sind durch einen Spalt 26 voneinander getrennt und stützen sich auf einem Verbindungsbauteil 29 ab. Die Magnetspule 10 wird über eine Leitung 19 von einem über einen elektrischen Steckkontakt 17 zuführbaren elektrischen Strom erregt. Der Steckkontakt 17 ist von einer Kunststoffummantelung 18 umgeben, die am Innenpol 13 angespritzt sein kann.

Die Ventilnadel 3 ist in einer Ventilnadelführung 14 geführt, welche scheibenförmig ausgeführt ist. Zur Hubeinstellung dient eine zugepaarte Einstellscheibe 15. An der anderen Seite der Einstellscheibe 15 befindet sich ein Anker 20. Dieser steht über einen ersten Flansch 21 kraftschlüssig mit der Ventilnadel 3 in Verbindung, welche durch eine Schweißnaht 22 mit dem ersten Flansch 21 verbunden ist. Auf dem ersten Flansch 21 stützt sich eine Rückstellfeder 23 ab, welche in der vorliegenden Bauform des Brennstoffeinspritzventils 1 durch eine Hülse 24 auf Vorspannung gebracht wird.

Abströmseitig des Ankers 20 ist ein zweiter Flansch 31 angeordnet, der als unterer Ankeranschlag dient. Er ist über eine Schweißnaht 33 kraftschlüssig mit der Ventilnadel 3 verbunden. Zwischen dem Anker 20 und dem zweiten Flansch 31 ist ein elastischer Zwischenring 32 zur Dämpfung von Ankerprellern beim Schließen des Brennstoffeinspritzventils 1 angeordnet.

In der Ventilnadelführung 14, im Anker 20 und am Ventilsitzkörper 5 verlaufen Brennstoffkanäle 30a bis 30c. Der Brennstoff wird über eine zentrale Brennstoffzufuhr 16 zugeführt und durch ein Filterelement 25 gefiltert. Das Brennstoffeinspritzventil 1 ist durch eine Dichtung 28 gegen eine nicht weiter dargestellte Verteilerleitung abgedichtet.

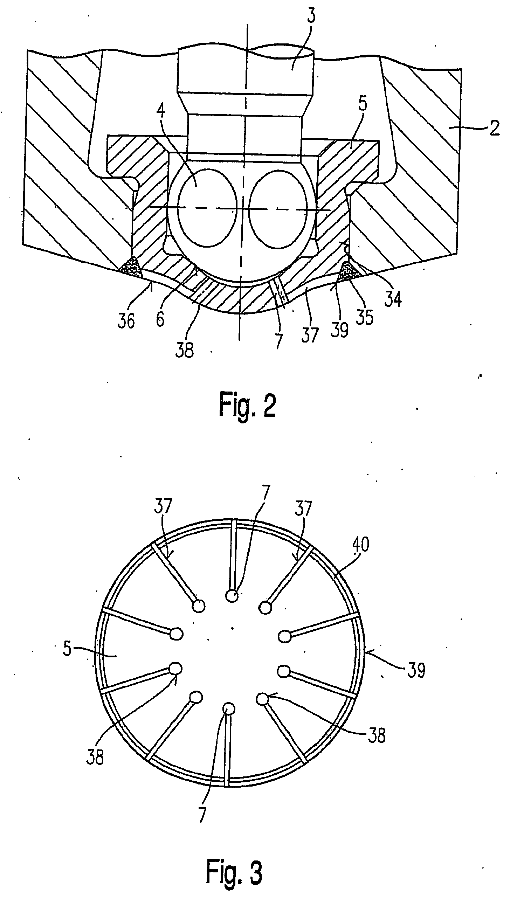

Erfindungsgemäß weist das Brennstoffeinspritzventil 1 an einer dem nicht weiter dargestellten Brennraum der Brennkraftmaschine zugewandten Stirnseite 36 des Ventilsitzkörpers 5, der in einer Ausnehmung 34 des Düsenkörpers 2 angeordnet und beispielsweise mittels einer Schweißnaht 35 mit diesem verbunden ist, Kapillaren 37 auf, welche den aus einem Mündungsbereich 38 der Abspritzöffnungen 7 austretenden Brennstoff kapillar nach radial außen ableiten und so dafür sorgen, daß sich kein Brennstofffilm in den Abspritzöffnungen 7 bzw. im Mündungsbereich 38 niederschlagen kann. Der abspritzseitige Teil des Brennstoffeinspritzventils 1 mit den Kapillaren 37 ist in den Fig. 2 und 3 näher dargestellt und in der nachfolgenden Beschreibung erläutert.

Im Ruhezustand des Brennstoffeinspritzventils 1 wird der erste Flansch 21 an der Ventilnadel 3 von der Rückstellfeder 23 entgegen seiner Hubrichtung so beaufschlagt, daß der Ventilschließkörper 4 am Ventilsitz 6 in dichtender Anlage gehalten wird. Der Anker 20 liegt auf dem Zwischenring 32 auf, der sich auf dem zweiten Flansch 31 abstützt. Bei Erregung der Magnetspule 10 baut diese ein Magnetfeld auf, welches den Anker 20 entgegen der Federkraft der Rückstellfeder 23 in Hubrichtung bewegt. Dabei nimmt der Anker 20 den ersten Flansch 21, welcher mit der Ventilnadel 3 verschweißt ist, und damit die Ventilnadel 3 ebenfalls in Hubrichtung mit. Der mit der Ventilnadel 3 in Wirkverbindung stehende Ventilschließkörper 4 hebt von der Ventilsitzfläche 6 ab, wodurch der Brennstoff abgespritzt wird.

Wird der Spulenstrom abgeschaltet, fällt der Anker 20' nach genügendem Abbau des Magnetfeldes durch den Druck der Rückstellfeder 23 auf den ersten Flansch 21 vom Innenpol 13 ab, wodurch sich die Ventilnadel 3 entgegen der Hubrichtung bewegt. Dadurch setzt der Ventilschließkörper 4 auf der Ventilsitzfläche 6 auf, und das Brennstoffeinspritzventil 1 wird geschlossen. Der Anker 20 setzt auf dem durch den zweiten Flansch 31 gebildeten Ankeranschlag auf.

Fig. 2 zeigt in einer auszugsweisen Schnittdarstellung den in Fig. 1 mit II bezeichneten Ausschnitt aus dem in Fig. 1 dargestellten Ausführungsbeispiel eines erfindungsgemäß ausgestalteten Brennstoffeinspritzventils 1.

Wie bereits in Fig. 1 angedeutet, weist der Ventilsitzkörper 5 idealerweise an seiner dem Brennraum zugewandten Stirnseite 36 Kapillaren 37 auf, welche von einem Mündungsbereich 38 jeder der Abspritzöffnungen 7 radial nach außen führen. Die Kapillaren 37 sind dabei mit einem beliebigen Profil, beispielsweise einem U-Profil, in die Stirnseite 36 des Ventilsitzkörpers 5 eingebracht und erstrecken sich z.B. bis zu einem radial äußeren Rand 39 des Ventilsitzkörpers 5.

Die Abspritzöffnungen 7 können dabei an beliebigen Punkten des Ventilsitzkörpers 5 angebracht sein. Vorzugsweise sind sie auf mehreren runden oder elliptischen Lochkreisen, die zueinander konzentrisch oder exzentrisch sein können, oder auf mehreren parallelen, schräg oder versetzt zueinander angeordneten geraden oder gebogenen Lochreihen angeordnet. Der Abstand zwischen den Lochmittelpunkten kann dabei äquidistant oder unterschiedlich sein, sollte jedoch aus fertigungstechnischen Gründen zumindest einen Lochdurchmesser betragen. Die räumliche Orientierung kann für jede Lochachse unterschiedlich sein, wie in Fig. 2 für zwei Abspritzöffnungen 7 angedeutet.

Durch die Kapillaren 37, welche sich von den Abspritzöffnungen 7 nach außen über die Oberfläche des Ventilsitzkörpers 5 erstrecken, kann die Verkokung der Abspritzöffnungen 7 reduziert werden. Da der Durchmesser der Abspritzöffnungen 7 typischerweise ca. 100 µm beträgt, ist die Gefahr, daß die Abspritzöffnungen 7 durch Verkokung mit der Zeit verstopfen und somit die Durchflußmenge unzulässig stark eingeschränkt wird, relativ groß. Durch die Kapillaren 37 kann sich ein an dem Ventilsitzkörper 5 niederschlagender Brennstofffilm von den Abspritzöffnungen 7 weggeleitet werden und folglich ein Brennstoffniederschlag und nachfolgendes Verkoken beim Abbrennen des Brennrauminhalts vermieden werden.

Um die Verkokung zu verhindern, sollten die Kapillaren 37 eine ausreichende Tiefe aufweisen, um genügend Brennstoff ableiten zu können. Die maximale Tiefe kann bis zu 75% der Wandstärke des Ventilsitzkörpers 5 betragen. Zum Erzielen einer befriedigenden Kapillarwirkung dürfen die Kapillaren 37 dabei vorzugsweise höchstens 20% des Durchmessers der Abspritzöffnungen 7 aufweisen.

Fig. 3 zeigt eine schematische Aufsicht auf den Ventilsitzkörper 5 des erfindungsgemäß ausgestalteten Brennstoffeinspritzventils 1 entgegen der Abspritzrichtung des Brennstoffs. Übereinstimmende Bauteile sind dabei mit übereinstimmenden Bezugszeichen versehen.

Im vorliegenden Ausführungsbeispiel weist das Brennstoffeinspritzventil 1 zehn Abspritzöffnungen 7 auf, welche auf einem zum Umfang des Ventilsitzkörpers 5 konzentrischen Kreis äquidistant angeordnet sind. Von jeder der Abspritzöffnungen 7 erstreckt sich eine Kapillare 37 radial nach außen bis zu einem Rand 39 des Ventilsitzkörpers 5.

Der genaue Verlauf der Kapillaren 37 kann beliebig an die Erfordernisse angepaßt werden. Beispielsweise können auch mehrere Kapillaren 37 von jeder Abspritzöffnung 7 ausgehen, die Kapillaren 37 können unter beliebigen Winkeln zum Radius des Ventilsitzkörpers 5 verlaufen oder die Kapillaren 37 nebeneinanderliegender Abspritzöffnungen 7 können sich treffen und im weiteren Verlauf als eine Kapillare 37 weitergeführt werden. Es ist ebenfalls denkbar, daß alle Kapillaren 37 in eine ringförmige Kapillare 40 münden, welche konzentrisch zum Kreis der Abspritzöffnungen 7 verläuft.

Die Herstellung der Kapillaren kann in beliebiger Weise durch herkömmliche spanende oder nichtspanende Metallbearbeitungsverfahren wie z. B. Laserbohren, Fräsen, Ätzen etc. erfolgen. Um die Herstellbarkeit zu vereinfachen, ist auch ein über den Ventilsitzkörper 5 verlaufendes z. B. gerändeltes Muster möglich, bei welchem zwei parallele Scharen von Kapillaren 37, welche sich unter einem Winkel schneiden, in geeigneter Weise am Ventilsitzkörper 5 angebracht werden. Um sicherzustellen, daß jede Abspritzöffnung 7 von einer Kapillare 37 angeschnitten wird, muß die Maschenweite des Musters hinreichend klein gehalten werden. Vorzugsweise ist die Maschenweite kleiner als der kleinste Durchmesser der Abspritzöffnungen.

Die Erfindung ist nicht auf das dargestellte Ausführungsbeispiel beschränkt und z. B. für beliebige Anzahlen von beliebig angeordneten Abspritzöffnungen 7 sowie für beliebige Bauweisen von nach innen öffnenden Mehrloch-Brennstoffeinspritzventilen 1 anwendbar.

## Patentansprüche

1. Brennstoffeinspritzventil (1) für Brennstoffeinspritzanlagen, insbesondere zum direkten Einspritzen von Brennstoff in einen Brennraum einer Brennkraftmaschine, mit einem erregbaren Aktuator (10) zur Betätigung eines Ventilschließkörpers (4), der zusammen mit einer an einem Ventilsitzkörper (5) ausgebildeten Ventilsitzfläche (6) einen Dichtsitz bildet, und zumindest zwei Abspritzöffnungen (7), die stromabwärts der Ventilsitzfläche (6) ausgebildet sind, wobei die Abspritzöffnungen (7) in einem Mündungsbereich (38) mit auf der dortigen Bauteil-Stirnseite (36) ausgebildeten Kapillaren (37) in Verbindung stehen,
wobei pro Abspritzöffnung (7) zumindest eine Kapillare (37) vorgesehen ist,
**dadurch gekennzeichnet,**
**daß** die Kapillaren (37) an der stromabwärtigen Stirnseite (36) des Ventilsitzkörpers (5) ausgebildet sind und
**daß** die Kapillaren (37) eine Breite aufweisen, welche maximal 20% des Durchmessers der Abspritzöffnungen (7) beträgt.

2. Brennstoffeinspritzventil nach Anspruch 1,
**dadurch gekennzeichnet,**
**daß** sich die Kapillaren (37) von den Abspritzöffnungen (7) nach radial außen bis zu einem Rand (39) des Ventilsitzkörpers (5) erstrecken.

3. Brennstoffeinspritzventil nach Anspruch 1 oder 2,
**dadurch gekennzeichnet,**
**daß** die Tiefe der Kapillaren (37) maximal 75% der Wandstärke des Ventilsitzkörpers (5) beträgt.

4. Brennstoffeinspritzventil nach einem der Ansprüche 1 bis 3,
**dadurch gekennzeichnet,**
**daß** die Kapillaren (37) in eine ringförmige Kapillare (40) einmünden, welche den Ventilsitzkörper (5) konzentrisch zu den Abspritzöffnungen (7) umgibt.

5. Brennstoffeinspritzventil nach einem der Ansprüche 1 bis 4,
**dadurch gekennzeichnet,**
**daß** die Kapillaren (37) unter unterschiedlichen Winkeln über die Oberfläche der Stirnseite (36) verlaufen.

6. Brennstoffeinspritzventil nach einem der Ansprüche 1 bis 5,
**dadurch gekennzeichnet,**
**daß** sich die Kapillaren (37) durch Rändeln mit zumindest zwei Scharen hergestellt sind und sich überschneiden.

7. Brennstoffeinspritzventil nach einem der Ansprüche 1 bis 6,
**dadurch gekennzeichnet,**
**daß** sich die Kapillaren (37) benachbarter Abspritzöffnungen (7) vereinigen.

## Claims

1. Fuel injection valve (1) for fuel injection systems, in particular for the direct injection of fuel into a combustion space of an internal combustion engine, with an excitable actuator (10) for actuating a valve-closing body (4) which, together with a valve-seat surface (6) formed on a valve-seat body (5), forms a sealing seat, and with at least two injection orifices (7) which are formed downstream of the valve-seat surface (6), the injection orifices (7) being connected in an issue region (38), to capillaries (37) formed on the component end face (36) located there, at least one capillary (37) being provided for each injection orifice (7), **characterized in that** the capillaries (37) are formed on the downstream end face (36) of the valve-seat body (5), and **in that** the capillaries (37) have a width which is at most 20% of the diameter of the injection orifices (7).

2. Fuel injection valve according to Claim 1,
**characterized in that** the capillaries (37) extend from the injection orifices (7) radially outwards as far as one edge (39) of the valve-seat body (5).

3. Fuel injection valve according to Claim 1 or 2, **characterized in that** the depth of the capillaries (37) is at most 75% of the wall thickness of the valve-seat body (5).

4. Fuel injection valve according to one of Claims 1 to 3, **characterized in that** the capillaries (37) issue into an annular capillary (40) which surrounds the valve-seat body (5) concentrically with respect to the injection orifices (7).

5. Fuel injection valve according to one of Claims 1 to 4, **characterized in that** the capillaries (37) run at different angles over the surface of the end face (36).

6. Fuel injection valve according to one of Claims 1 to 5, **characterized in that** the capillaries (37) are produced by knurling with at least two blades and overlap one another.

7. Fuel injection valve according to one of Claims 1 to 6, **characterized in that** the capillaries (37) of adjacent injection orifices (7) are combined.

## Revendications

1. Injecteur de carburant (1) pour des installations d'injection de carburant, notamment pour l'injection directe de carburant dans la chambre de combustion d'un moteur à combustion,
comprenant un actionneur (10) commandé pour actionner un organe d'obturation de soupape (4) qui forme un siège d'étanchéité avec une surface de siège d'étanchéité (6) réalisée sur un corps de siège de soupape (5), et au moins deux orifices d'éjection (7) en aval de la surface formant siège de soupape (6), débouchant dans la zone de sortie (38) en communiquant avec des capillaires (37), réalisés sur la face frontale (36) correspondante du composant,
les orifices d'éjection (7) ayant au moins chacun un capillaire (37),
**caractérisé en ce que**
les capillaires (37) sont réalisés sur la face frontale en aval (36) du corps formant siège de soupape (5) et
les capillaires (37) ont une largeur qui correspond au maximum à 20% du diamètre des orifices d'éjection (7).

2. Injecteur de carburant selon la revendication 1,
**caractérisé en ce que**
les capillaires (37) s'étendent à partir des orifices d'éjection (7) dans la direction radiale vers l'extérieur jusqu'à un bord (39) du corps formant siège de soupape (5).

3. Injecteur de carburant selon les revendications 1 ou 2,
**caractérisé en ce que**
la profondeur des capillaires (37) représente au maximum 75% de l'épaisseur de paroi du corps formant siège de soupape (5).

4. Injecteur de carburant selon l'une des revendications 1 à 3,
**caractérisé en ce que**
les capillaires (37) débouchent dans un capillaire annulaire (40) entourant concentriquement le corps formant siège de soupape (45) par rapport aux orifices d'éjection (7).

5. Injecteur de carburant selon l'une des revendications 1 à 4,
**caractérisé en ce que**
les capillaires (37) font des angles différents par rapport à la surface de la face frontale (36).

6. Injecteur de carburant selon les revendications 1 à 5,
**caractérisé en ce que**
les capillaires (37) sont réalisés par moletage selon au moins deux faisceaux seccants.

7. Injecteur de carburant selon les revendications 1 à 6,
**caractérisé en ce que** les capillaires (37) des orifices d'éjection voisins sont réunis.
